**Europäisches Patentamt**

**European Patent Office**

**Office européen des brevets**

(11) Veröffentlichungsnummer: **0 044 488 B1**

(12) **EUROPÄISCHE PATENTSCHRIFT**

(45) Veröffentlichungstag der Patentschrift:
03.10.84

(51) Int. Cl.³: **B 03 C 3/68**

(21) Anmeldenummer: **81105401.4**

(22) Anmeldetag: **10.07.81**

(54) Verfahren und Einrichtung zum Betrieb eines Elektrofilters mit in der Höhe veränderbarer Gleichspannung und überlagerten Impulsen.

(30) Priorität: **17.07.80 DE 3027172**

(43) Veröffentlichungstag der Anmeldung:
**27.01.82 Patentblatt 82/4**

(45) Bekanntmachung des Hinweises auf die Patenterteilung:
**03.10.84 Patentblatt 84/40**

(84) Benannte Vertragsstaaten:
**AT CH DE FR GB IT LI SE**

(56) Entgegenhaltungen:
**EP - A - 0 030 321**
**DE - C - 568 123**
**FR - A - 2 302 788**
**GB - A - 808 522**
**US - A - 3 039 252**

**PATENT ABSTRACTS OF JAPAN, Band 3, Nr. 105, 5. September 1979, Seite 34M71**
**Zeitschrift "Staub-Reinhaltung der Luft" Nr. 36, 1976, Nr. 1, Seiten 19 bis 26**

(73) Patentinhaber: **METALLGESELLSCHAFT AG,**
**Reuterweg 14 Postfach 3724, D-6000 Frankfurt/M.1 (DE)**
Patentinhaber: **Siemens Aktiengesellschaft, Berlin und München Wittelsbacherplatz 2, D-8000 München 2 (DE)**

(72) Erfinder: **Dönig, Gerhard, Dipl.-Ing., Weiherstrasse 9, D-8520 Erlangen (DE)**
Erfinder: **Schummer, Helmut, Dipl.-Ing., Gustav-Adolf-Strasse 27, D-6056 Heusenstamm (DE)**
Erfinder: **Schmidt, Walter, Dipl.-Ing., Waldstrasse 22, D-8521 Uttenreuth (DE)**
Erfinder: **Neulinger, Franz, Dipl.-Ing., Friedrich-Ebert-Strasse 17, D-6057 Dietzenbach (DE)**

(74) Vertreter: **Mehl, Ernst, Dipl.-Ing. et al, Postfach 22 01 76, D-8000 München 22 (DE)**

## Beschreibung

Die Erfindung bezieht sich auf ein Verfahren zum Betrieb eines Elektrofilters mit in der Höhe veränderbarer Gleichspannung und überlagerten Gleichspannungsimpulsen, bei denen mindestens einer der Parameter Pulshöhe, Pulsbreite, Pulsfolgefrequenz und Pulsanstiegsgeschwindigkeit veränderbar ist und ebenso auf eine hierzu geeignete Einrichtung, bei der eine steuerbare Gleichspannungsquelle und eine steuerbare Pulsspannungsquelle an das Elektrofilter angeschlossen sind. Ein Verfahren und eine Einrichtung dieser Art sind beispielsweise in der Zeitschrift «Staub-Reinhaltung der Luft» Nr. 36, 1976, Nr. 1, Seiten 19 bis 26 beschrieben.

Im Regelfall werden heute Elektrofilter mit hoher Gleichspannung betrieben, die durch Gleichrichtung aus einem Wechselspannungsnetz erzeugt wird (vgl. z.B. Siemens Zeitschrift 1971, Heft 9, Seiten 567 bis 572).

Es ist ferner auch bereits bekannt, Elektrofilter mit hochfrequentem Wechselstrom (vgl. z.B. DE-A-389 228) oder mit niederfrequentem Wechselstrom unter 50 Hz (vgl. DE-A-940 110) zu betreiben.

Weiterhin ist es bereits bekannt, auch pulsierende Gleichspannung (vgl. DE-A-369 879) als Speisespannung zu benutzen, wobei die pulsierende Gleichspannung durch Überlagerung einer Gleichspannung mit einem Sinuswechselstrom oder durch Brückengleichrichtung erzielt werden kann.

Es ist fernerhin auch bereits bekannt, die Frequenz der pulsierenden Gleichspannungshalbwellen am Elektrofilter derart zu verändern, dass eine vorgegebene Überschlagshäufigkeit pro Zeiteinheit konstant bleibt.

Des weiteren ist es auch bekannt, Gleichspannung mit überlagerten Spannungsimpulsen zu benutzen (vgl. DE-A-2 608 436).

Aus den vorgenannten Literaturstellen ist ersichtlich, dass bereits erkannt wurde, dass die Amplitude von Gleichspannung und Pulsen, die Pulsfrequenz und die Flankensteilheit der Pulse eine Rolle spielen.

Da neben diesen Faktoren auch die Beschaffenheit des jeweils abzuscheidenden Staubes eine wesentliche Rolle spielt, ist verständlich, dass bis heute noch kein den jeweiligen Betriebsbedingungen angepasstes Optimum der Betriebsparameter angegeben werden konnte.

Die Aufgabe der vorliegenden Erfindung besteht darin, ein relativ einfaches Optimierungsverfahren und eine entsprechende Einrichtung unter Einbeziehung einer zulässigen Reingasstaubbeladung anzugeben.

Diese Aufgabe wird erfindungsgemäss durch die in den Ansprüchen 1 und 5 angegebenen Massnahmen gelöst. Durch die Optimierung der Anlage nach dem Energieminimum erhält man ein relativ einfaches Kriterium für die Aussteuerung von Pulsspannungsquelle bzw. Gleichspannungsquelle.

Das Verfahren eignet sich auch zum Betrieb einer aus mehreren Elektrofiltern bestehenden Anlage, von denen mindestens einer der Filter bzw. Filterzonen mit Gleichspannung und überlagerten Pulsen betrieben wird. Auch hier kann durch Veränderung sämtlicher Parameter auf iterativem Wege erreicht werden, dass die erforderliche Energie bei vorgegebener Reingasstaubbelastung am Ausgang der Anlage einem Minimum zustrebt.

Zur Erzeugung der Gleichspannung und der Pulsspannung werden vorteilhafterweise mit Thyristoren aufgebaute Gleich- bzw. Umrichter oder entsprechende Kondensatoren und Hochgeschwindigkeits-Funkenstrecken verwendet, die ihrerseits wieder ihre Steuerbefehle von einem mit einem Staubbeladungsmessgerät verbundenen Rechner erhalten.

Anhand eines in der Zeichnung dargestellten Ausführungsbeispieles sei die Erfindung näher erläutert.

Es zeigen

Fig. 1 einen schematischen Aufbau einer Elektrofilteranlage,

Fig. 2 einen näheren Schaltungsaufbau der in der Anlage nach Fig. 1 verwendeten Pulsspannungsquelle,

Fig. 3 den zeitlichen Verlauf der Filterspannung bei einer Anlage nach Fig. 1,

Fig. 4 einen idealisierten Verlauf der Staubabscheidung und der von Gleichspannungsquelle und Pulsspannungsquelle abgegebenen Energien aufgetragen über der Zeit und

Fig. 5 eine Elektrofilteranlage, die aus mehreren Filtern oder Filterzonen besteht.

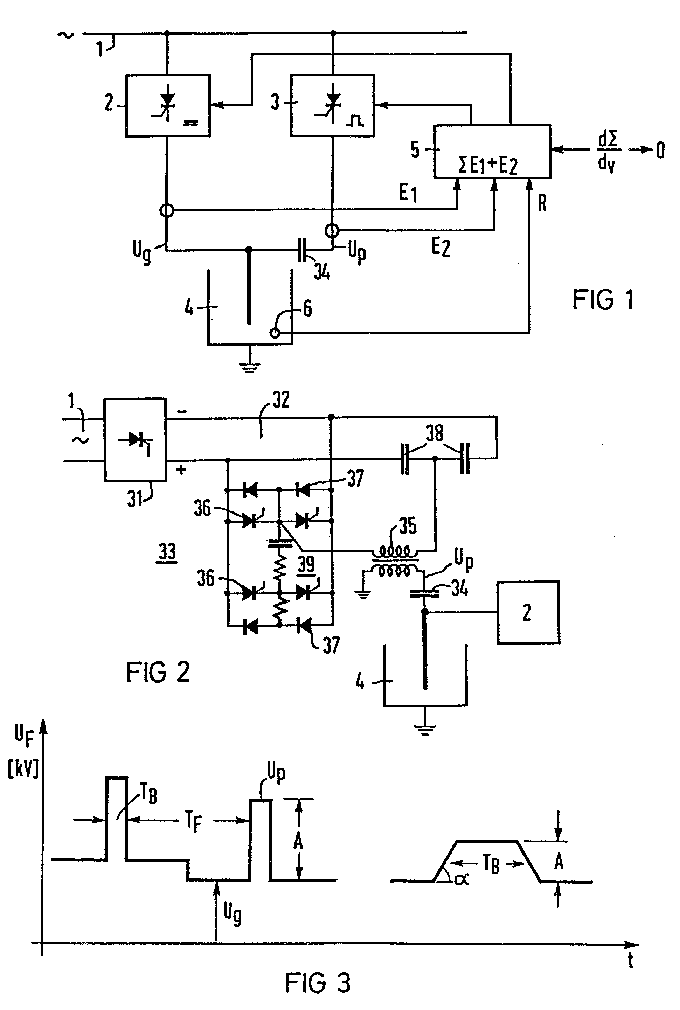

Das in Fig. 1 schematisch dargestellte Elektrofilter 4 wird in an sich bekannter Weise aus einem Wechselspannungsnetz 1 über einen steuerbaren Gleichrichter 2 mit hochgespanntem Gleichstrom gespeist. Zusätzlich sind der am Filter liegenden Gleichspannung $U_g$ über einen Koppelkondensator 34 noch Impulse $U_P$ überlagert, die von einer an das Netz 1 angeschlossenen Pulsspannungsquelle 3 in Form eines Thyristorpulsumrichters stammen. Sowohl Gleichrichter 2 als auch steuerbare Pulsspannungsquelle 3 erhalten die Steuerbefehle von einem Steuergerät 5, dem als Istwerte der vom Gleichspannungsgerät abgegebenen el. Energie E1 und der von der Pulsspannungsquelle 3 abgegebenen Energie E2 proportionale Signale zugeführt werden. Im Steuergerät 5 wird ein der Summe beider Energien proportionales Signal gebildet und fortlaufend zumindest einer der Parameter, z.B. Höhe der Gleichspannung oder Impulshöhe fortlaufend derart verändert, dass die aufgenommene Energiesumme E1 plus E2 einem Minimum zustrebt.

Fig. 2 zeigt einige Einzelheiten über den Aufbau der Pulsspannungsquelle. Wie ersichtlich, wird die Netzwechselspannung zunächst mit einem steuerbaren Gleichrichter 31 gleichgerichtet. An den Gleichstromzwischenkreis 32 am Ausgang des Gleichrichters 31 ist der eigentliche Wechselrichter 33 angeschlossen, der aus den Hauptventilen 36 und den Löschventilen 37 besteht. Der zwischen den Hauptventilen liegende Schwingkreis 39 wird an einem Ende über die Primärwicklung eines Transformators 35 und den Kondensatoren 38 mit dem Gleichstromzwischenkreis 32 verbunden. Die an der Sekundärwicklung des Transformators 35 auftretende Pulsspannung $U_P$ wird über den Koppelkondensator 34 dem Elektrofilter zusammen mit der vom Gleichrichter 2 stammenden Gleichspannung zugeführt.

An die Stelle des Umrichters kann auch eine entsprechende Zerhackerschaltung treten, für deren Thyristoren gegebenenfalls Löschkreise versehen sind. Damit ergibt sich der in Fig. 3 idealisiert dargestellte Verlauf der Filterspannung $U_F$; wie ersichtlich, besteht die Filterspannung aus einem Gleichspannungsanteil $U_g$ und einem Pulsspannungsanteil $U_P$, wobei als variable Parameter der Pulsspannung die Amplitude A, die Pulsbreite $T_B$, die Pulsanstiegsgeschwindigkeit $\alpha$ und die Pulsfolgefrequenz $1/T_F$ zu nennen sind.

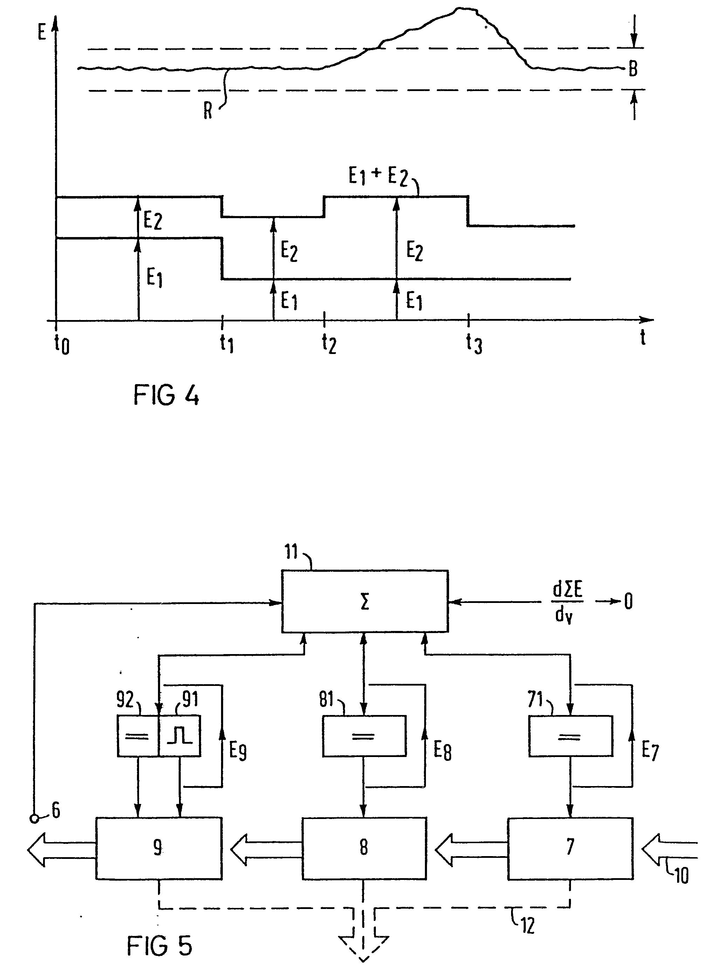

Fig. 4 zeigt das iterative Suchverfahren in idealisierter Darstellung, wobei die Grössenverhältnisse zwischen E1 und E2 nicht masstabsgerecht dargestellt sind. Wie ersichtlich, führt die zum Zeitpunkt t0 aufgewandte Gesamtleistung aus Gleichspannungsleistung E1 und Impulsleistung E2 zu einem Entstaubungsgrad R des Filters der innerhalb eines zugelassenen Toleranzbereiches B liegt.

Zum Zeitpunkt t1 wird die Filtergleichspannung und damit die elektrische Leistung E1 verringert und gleichzeitig die Pulsleistung E2 vergrössert. Damit ergibt sich insgesamt gesehen eine Verringerung der Gesamtenergie E1 + E2, und zwar ohne dass der Mittelwert der Abscheidung R die vorgegebenen Grenzwerte unterschreitet. Es wäre nun sinnvoll, diesen Weg weiter fortzuführen bis der untere zulässige Grenzwert erreicht ist. Im vorliegenden Fall ist jedoch ein anderes Vorgehen angedeutet, und zwar wird die Pulsleistung E2 zum Zeitpunkt t2 noch weiter erhöht, so dass sich eine Gesamtleistung ergibt, die wieder mit der zum Zeitpunkt t0 übereinstimmt. Hierdurch ergibt sich aber ein Mittelwert der Abscheidung R, der den oberen Grenzwert des geforderten Bereiches B überschreitet. Da eine derartige Überschreitung nicht notwendig ist, wird zum Zeitpunkt t3 die Energie E2 bei gleichbleibender Energie E1 selbsttätig wieder vermindert, so dass sich wieder ein innerhalb des Toleranzbereiches B liegender Entstaubungsgrad einstellt, und zwar bei einer Gesamtenergie E1 plus E2, die deutlich unter der Energie bei Beginn des Suchverfahrens liegt.

Der Einfachheit der Darstellung halber wurde davon ausgegangen, dass nur Gleichspannung und Amplitude der Gleichspannungspulse verändert wurden. Unter Zuhilfenahme eines Rechners ist dagegen in einer Vielzahl von iterativen Schritten eine weitaus feinfühligere Anpassung durch Verändern sämtlicher Parameter möglich.

Das vorstehend beschriebene Verfahren lässt sich auch im Rahmen einer aus einer Reihe von Filtern bzw. Filterzonen 7, 8 und 9 bestehenden Anlage verwenden. Hier durchströmt das zu reinigende Gas 10 nacheinander die einzelnen Filter bzw. Filterzonen 7, 8 und 9. Wie gestrichelt mit 12 angedeutet, können die Filter 7, 8 und 9 auch parallelgeschaltet sein. Die Filter bzw. Filterzonen 7 und 8 verfügen jeweils über eine regelbare Gleichspannungsquelle 71 bzw. 81. Dem Filter bzw. der Filterzone 9 ist dagegen eine kombinierte Spannungsversorgung zugeordnet, und zwar besteht diese aus Gleichspannungsquelle 92 und steuerbarer Pulsspannungsquelle 91. Die in den Filtern aufgenommenen elektrischen Leistungen E7, E8 und E9 werden an einen Leitrechner 11 gemeldet, der die Summe aus diesen Messwerten bildet. Durch entsprechende Stellbefehle des Rechners 11 werden dann die einzelnen Leistungen E7, E8 und E9 auf iterativem Wege so verändert, dass die Gesamtsumme der Energien E7 + E8 + E9 einem Minimum zustrebt, wobei das Einhalten vorgegebener Staubbeladungsgrenzen mittels des Staubbeladungsmessgerätes 6 überwacht wird.

Es kann gelegentlich auch von Vorteil sein, dem ersten Filter oder allen Filtern eine kombinierte Spannungsversorgung zuzuordnen.

Bei Verwendung von überlagerten Spannungsimpulsen kann es in einer Abwandlung des Verfahrens auch vorteilhaft sein, wenn die Impulsfolgefrequenz der Spannungsimpulse in bestimmten Zeitintervallen selbsttätig, kontinuierlich oder stufenweise erhöht bzw. erniedrigt wird. Die Zeitintervalle werden dabei auf iterativem Weg derart selbsttätig verändert, dass der Reingasstaubgehalt am Anlagen-Ausgang einem Minimum zustrebt. Der Vorteil dieses Verfahrens ist es, dass die bestimmten Staubfraktionen bzw. Massenfraktionen bzw. verschiedenen Staubarten zugeordneten zur elektrischen Aufladung optimalen Impulsfolgefrequenzen durchfahren werden.

Unter überlagerten Spannungsimpulsen soll im vorliegenden Fall auch die Überlagerung von Wechselspannung verstanden werden.

Ein Erkennen dieser vorgenannten optimalen Einstellungen ist im Hinblick auf einen wirtschaftlichen Betrieb des Elektrofilters von grossem Interesse.

## Patentansprüche

1. Verfahren zum Betrieb eines Elektrofilters (4) mit in der Höhe veränderbarer Gleichspannung ($U_g$) und überlagerten Impulsen ($U_p$), bei denen mindestens einer der Parameter Pulshöhe (A), Pulsbreite ($T_B$), Pulsfolgefrequenz ($1/T_F$) und Pulsanstiegsgeschwindigkeit ($\alpha$) veränderbar ist, dadurch gekennzeichnet, dass Gleichspannung ($U_g$) und/oder einer der Parameter der Impulse ($U_p$) auf iterativem Wege selbsttätig so verändert werden kann, dass die Summe der vom Filter aufgenommenen elektrischen Energien (E1, E2) aus Gleichspannung ($U_g$) und Impulsen ($U_p$) bei Einhaltung eines vorgegebenen Mittelwertes (R) der Reingasstaubbeladung einem Minimum zustrebt.

2. Verfahren nach Anspruch 1, dadurch gekennzeichnet, dass einem Absinken der Gleichspannung ($U_g$) eine Erhöhung der Amplitude (A) der Impulse ($U_p$) und/oder Pulsfolgefrequenz ($1/T_F$) zugeordnet ist.

3. Verfahren zum Betrieb einer aus mehreren Elektrofiltern (7, 8, 9) bzw. Filterzonen bestehenden Anlage, von denen mindestens eines der Filter (7, 8, 9) bzw. Filterzonen mit Gleichspannung und überlagerten Impulsen betrieben wird, dadurch gekennzeichnet, dass die Gleichspannung mindestens eines Filters (9) und/oder die Impulse derart selbsttätig verändert werden, dass die Summe der von allen Filtern (7, 8, 9) aufgenommenen elektrischen Energien (E7, E8, E9) – bei vorgegebener Reingasstaubbeladung am Ausgang der Anlage – einem Minimum zustrebt.

4. Verfahren nach Anspruch 1, dadurch gekennzeichnet, dass die Zeitintervalle, in denen die Pulsfolgefrequenz ($1/T_F$) der am Filter (4) liegenden, überlagerten Impulse erhöht oder erniedrigt werden, auf iterativem Wege derart selbsttätig verändert werden, dass die Reingasstaubbeladung einem Minimum zustrebt.

5. Einrichtung zum Betrieb eines Elektrofilters (4) mit in der Höhe veränderbarer Gleichspannung ($U_g$) und überlagerten Impulsen ($U_p$), bei denen mindestens einer der Parameter Pulshöhe (A), Pulsbreite ($T_B$), Pulsfolgefrequenz ($1/T_F$) und Pulsanstiegsgeschwindigkeit ($\alpha$) veränderbar ist und bei der eine steuerbare Gleichspannungsquelle (2) und eine steuerbare Pulsspannungsquelle (3) an das Elektrofilter angeschlossen sind, gekennzeichnet durch einen die Steuerbefehle für Gleichspannungsquelle (2) und Pulsspannungsquelle (3) liefernden Rechner (5), der mit einem Staubbeladungsmessgerät (6) verbunden ist, wobei Gleichspannung ($U_g$) und/oder einer der Parameter der Impulse ($U_p$) auf iterativem Wege selbsttätig so verändert werden kann, dass die Summe der vom Filter aufgenommenen elektrischen Energien (E1, E2) aus Gleichspannung ($U_g$) und Impulsen ($U_p$) bei Einhaltung eines vorgegebenen Mittelwertes (R) der Reingasstaubbeladung einem Minimum zustrebt.

6. Einrichtung anch Anspruch 5, gekennzeichnet durch eine als Thyristorumrichter mit Gleichstromzwischenkreis (32) ausgebildete Pulsspannungsquelle (3).

7. Einrichtung nach Anspruch 5, gekennzeichnet durch eine als Hochgeschwindigkeitsfunkenstrecke ausgebildete Pulsspannungsquelle.

**Claims**

1. Process for operating an electrofilter (4) with an amplitude-variable direct voltage ($U_g$) and superimposed pulses ($U_p$) of which at least one of the parameters pulse amplitude (A), pulse width ($T_B$), pulse repetition frequency ($1/T_F$) and pulse rise rate ($\alpha$) is variable, characterised in that the direct voltage ($U_g$) and/or one of the parameters of the pulses ($U_p$) can be varied repeatedly and automatically in such a manner that the sum of the electrical powers (E1, E2) of the direct voltage ($U_g$) and pulses ($U_p$) picked up by the filter tends towards a minimum while maintaining a predetermined mean value (R) of the pure gas dust loading.

2. Process according to claim 1, characterised in that an increase in amplitude (A) of the pulses ($U_p$) and/or pulse repetition frequency ($1/T_F$) is associated with a drop in direct voltage ($U_g$).

3. Process for operating an installation consisting of a plurality of electrofilters (7, 8, 9), respectively filter zones, of which at least one of the filters (7, 8, 9) or filter zones is operated with a direct voltage and superimposed pulses, characterised in that the direct voltage of at least one filter (9) and/or the pulses are automatically varied in such a manner that the sum of the electrical powers (E7, E8, E9) picked up by all the filters (7, 8, 9) tends towards a minimum – for a predetermined pure gas dust loading at the output of the installation.

4. Process according to claim 1, characterised in that the time intervals, in which the pulse repetition frequency ($1/_F$) of the superimposed pulses on the filter (4) is increased or lowered, are varied automatically and repeatedly in such a way that the pure gas dust loading tends towards a minimum.

5. Device for operating an electrofilter (4) having amplitude-variable direct voltage ($U_g$) and superimposed pulses ($U_p$) of which at least one of the parameters pulse amplitude (A), pulse width ($T_B$), pulse repetition frequency ($1/T_F$) and pulse rise rate ($\alpha$) is variable, and wherein a controllable direct voltage source (2) and a controllable pulse voltage source (3) are connected to the electrofilter, characterised by a computer (5) supplying the control commands for direct voltage source (2) and pulse voltage source (3), which computer (5) is connected to a dust loading measuring device (6), the direct voltage ($U_g$) and/or one of the parameters of the pulses ($U_p$) being able to be varied automatically and repeatedly in such a way that the sum of the electrical powers (E1, E2) of the direct voltage ($U_g$) and pulses ($U_p$) picked up by the filter tends towards a minimum, at the same time maintaining a predetermined mean value (R) of the pure gas dust loading.

6. Device according to claim 5, characterised by a pulse voltage source (3) designed as a thyristor inverter with an intermediate direct current circuit (32).

7. Device according to claim 5, characterised by a pulse voltage source designed as a highspeed spark gap.

**Revendications**

1. Procédé pour le fonctionnement d'un électrofiltre (4) avec une tension continue ($U_g$) à amplitude réglable et à impulsions superposées ($U_p$), pour lesquelles au moins un des paramètres tels que l'amplitude (A) des impulsions, la largeur ($T_B$) des impulsions, la fréquence de répétition des impulsions ($1/T_F$) et la vitesse d'accroissement de l'amplitude des impulsions ($\alpha$) est modi-

ment de l'amplitude des impulsions ($\alpha$) est modifiable, caractérisé par le fait que la tension continue ($U_g$) et/ou l'un des paramètres des impulsions ($U_p$) peut être modifiée automatiquement et par voie itérative de manière que la somme des énergies électriques (E1, E2) absorbée par le filtre et formée par la tension continue ($U_g$) et par les impulsions tende vers un minimum, la charge en poussières du gaz pur conservant une valeur moyenne (R) prédéterminée.

2. Procédé selon la revendication 1, caractérisé par le fait qu'à une chute de la tension continue ($U_g$) est associé un accroissement de l'amplitude (A) des impulsions ($U_p$) et /ou de la fréquence de répétition des impulsions (1/$T_F$).

3. Procédé pour le fonctionnement d'une installation constituée par plusieurs électrofiltres (7, 8, 9) ou zones de filtre parmi lesquels au moins l'un des filtres (7, 8, 9) ou zones de filtres est alimenté en tension continue et à impulsions superposées, caractérisé par le fait que la tension continue d'au moins un filtre (9) et/ou les impulsions sont modifiées automatiquement de telle manière que la somme des énergies électriques (E7, E8, E9) absorbée par tous les filtres (7, 8, 9) tende vers un minimum pour une charge de poussières prédéterminée du gaz pur à la sortie de l'installation.

4. Procédé selon la revendication 1, caractérisé par le fait que les intervalles de temps durant lesquels la fréquence de répétition des impulsions (1/$T_F$) appliquées au filtre (4) sont augmentés ou diminués, sont modifiés automatiquement et par voie itérative de manière que la charge en

poussières du gaz pur tende vers un minimum.

5. Installation pour le fonctionnement d'un électrofiltre (4) avec une tension continue ($U_g$) à amplitude réglable et à impulsions superposées ($U_p$), pour lesquelles au moins l'un des paramètres tels que l'amplitude (A) des impulsions, la largeur des impulsions ($T_B$), la fréquence de répétition des impulsions (1/$T_F$) et la vitesse d'accroissement des impulsions ($\alpha$) est modifiable, et dans laquelle une source de tension continue (2) réglable et une source de tension impulsionnelle (3) réglable sont reliées à l'électrofiltre, caractérisée par un calculateur (5) qui fournit les instructions de commande pour la source de tension continue (2) et pour la source de tension impulsionnelle (3), et qui est relié avec un appareil de mesure (6) de la charge en poussières, la tension continue ($U_g$) et/ou l'un des paramètres des impulsions ($U_p$) étant susceptibles d'être modifiés automatiquement et par voie itérative de telle façon que la somme des énergies électriques (E1, E2) absorbée par le filtre et fournie par la tension continue ($U_g$) et les impulsions ($U_p$), tende vers un minimum, si la charge en poussières du gaz pur conserve une valeur moyenne (R) prédéterminée.

6. Installation selon la revendication 5, caractérisée par une source de tension impulsionnelle (3) réalisée sous la forme d'un convertisseur à thyristors avec circuit intermédiaire en courant continu (32).

7. Installation selon la revendication 5, caractérisée par une source de tension impulsionnelle réalisée sous la forme d'une voie de décharge à vitesse élevée.

FIG 1

FIG 2

FIG 3

FIG 4

FIG 5